(19) Europäisches Patentamt
European Patent Office
Office européen des brevets

(11) **EP 3 805 309 A1**

(12) **EUROPEAN PATENT APPLICATION**
published in accordance with Art. 153(4) EPC

(43) Date of publication:
**14.04.2021 Bulletin 2021/15**

(21) Application number: **19816108.5**

(22) Date of filing: **07.06.2019**

(51) Int Cl.:
*C08L 21/00* (2006.01)    *B60C 1/00* (2006.01)
*C08F 261/04* (2006.01)    *C08K 3/013* (2018.01)
*C08K 5/54* (2006.01)    *C08L 9/00* (2006.01)
*C08L 29/04* (2006.01)    *C08L 51/06* (2006.01)
*C08L 91/00* (2006.01)

(86) International application number:
**PCT/JP2019/022775**

(87) International publication number:
**WO 2019/235622 (12.12.2019 Gazette 2019/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.06.2018 JP 2018110646**

(71) Applicant: **Kuraray Co., Ltd.**
**Kurashiki-shi, Okayama 710-0801 (JP)**

(72) Inventors:
• **AMANO Yusuke**
**Kurashiki-shi, Okayama 710-0801 (JP)**

• **ISHIDA Eiichi**
**Okayama-shi, Okayama 702-8601 (JP)**
• **MAEKAWA Kazuhiko**
**Kurashiki-shi, Okayama 710-0801 (JP)**
• **KODA Daisuke**
**Kamisu-shi, Ibaraki 314-0197 (JP)**
• **KANBARA Hiroshi**
**Kamisu-shi, Ibaraki 314-0197 (JP)**

(74) Representative: **Müller-Boré & Partner
Patentanwälte PartG mbB
Friedenheimer Brücke 21
80639 München (DE)**

(54) **RUBBER COMPOSITION AND TIRE USING SAME**

(57) The present invention provides a rubber composition having superior moldability, wear resistance, and grip performance, and tires therewith. The present invention relates to a rubber composition comprising: a copolymer (B) constituted of a vinyl alcohol polymer (B-1) region and a diene polymer (B-2) region; and a rubber component (C), wherein the rubber composition comprises 1 to 20 parts by mass of the copolymer (B) relative to 100 parts by mass of the rubber component (C).

EP 3 805 309 A1

**Description**

TECHNICAL FIELD

The present invention relates to a rubber composition having superior moldability, wear resistance, and grip performance, and to tires therewith.

BACKGROUND ART

Traditionally, fillers such as carbon black and silica are mixed into rubber components such as natural rubber and styrene-butadiene rubber to improve the mechanical strength of a rubber composition, and such rubber compositions have been used in a wide range of tire applications requiring wear resistance and mechanical strength. Grip performance is one common requirement for tires. A tire is required to satisfy two kinds of grip performance at the same time: one providing grip on icy surfaces, and one providing grip on wet roads. Today's tires also need to develop high levels of different functions at the same time, including ice grip performance, fuel efficiency, and wear resistance. However, satisfying these properties is often a trade-off, and providing a tire that simultaneously satisfies all these properties remains an important challenge in the field.

Of particular importance in meeting these requirements is the properties of the tread, a tire component that directly makes contact with the ground. In order to develop required properties such as above, there are attempts to make changes to the additives contained in the rubber composition of the tread. For example, Patent Literatures 1 and 2 describe mixing a polyvinyl alcohol powder into the rubber of the tread to improve the frictional force on icy surfaces. Patent Literature 3 describes mixing a hydrous gel of polyvinyl alcohol into the rubber of the tread to improve the frictional force on ice and wear resistance. Patent Literature 4 discloses a tire using a graft copolymer. However, this related art document does not disclose a composition containing a graft copolymer and a rubber component, nor does it suggest using such a composition for tires, especially for the tread.

CITATION LIST

Patent Literature

Patent Literature 1: JP 5(1993)-147406 A
Patent Literature 2: JP 5(1993)-148390 A
Patent Literature 3: JP 2011-184494 A
Patent Literature 4: JP 2016-000797 A

SUMMARY OF INVENTION

Technical Problem

However, with the tires described in Patent Literatures 1 and 2, the required frictional force on ice and the required wear resistance cannot be achieved at the same time. In fact, it is clearly indicated in Patent Literature 3 that simply mixing a powder of polyvinyl alcohol into the rubber used for the tread is ineffective. As with the tires described in Patent Literatures 1 and 2, the tires described in Patent Literatures 3 and 4 cannot be said as having high levels of frictional force on ice and high levels of wear resistance, and further improvements are needed. In addition to these properties, these tires also need to have sufficient moldability.

The present invention has been made to provide a solution to the foregoing issues, and the invention relates to a rubber composition capable of exhibiting superior moldability and wear resistance while maintaining grip performance, and to tires therewith.

Solution to Problem

The present inventors conducted intensive studies, and found that superior moldability and wear resistance with maintained grip performance can be achieved with a rubber composition comprising a copolymer (B) constituted of a vinyl alcohol polymer (B-1) region and a diene polymer (B-2) region, and a rubber component (C) in specific proportions, or with a tire therewith. The present invention was completed on the basis of this finding.

Specifically, the present invention includes the following.

[1] A rubber composition comprising: a copolymer (B) constituted of a vinyl alcohol polymer (B-1) region and a diene polymer (B-2) region; and a rubber component (C), wherein the rubber composition comprises 1 to 20 parts by mass of the copolymer (B) relative to 100 parts by mass of the rubber component (C).

[2] The rubber composition according to [1], wherein the rubber composition further comprises a vinyl alcohol polymer (A), the vinyl alcohol polymer (A) being contained in an amount of 1 to 20 parts by mass relative to 100 parts by mass of the rubber component (C).

[3] The rubber composition according to [2], wherein the rubber composition comprises 10 to 90 mass% of the copolymer (B) relative to total 100 parts by mass of the vinyl alcohol polymer (A) and the copolymer (B).

[4] The rubber composition according to any one of [1] to [3], wherein the vinyl alcohol polymer (B-1) is an ethylene-vinyl alcohol copolymer.

[5] The rubber composition according to any one of [1] to [4], wherein the vinyl alcohol polymer (A) is an ethylene-vinyl alcohol copolymer.

[6] The rubber composition according to any one of [1] to [5], wherein the diene polymer (B-2) is at least one selected from the group consisting of polybutadiene, polyisoprene, and polyisobutylene.

[7] The rubber composition according to any one of [1] to [6], wherein the copolymer (B) is a graft copolymer (B1).

[8] The rubber composition according to any one of [1] to [7], wherein the rubber composition further comprises an inorganic filler (D).

[9] The rubber composition according to any one of [1] to [8], wherein the rubber composition further comprises a silane coupling agent (E).

[10] The rubber composition according to any one of [1] to [9], wherein the rubber composition further comprises an oil (F).

[11] The rubber composition according to any one of [1] to [10], wherein the rubber component (C) comprises a synthetic rubber (C-1).

[12] The rubber composition according to [11], wherein the synthetic rubber (C-1) comprises at least one diene rubber selected from the group consisting of polybutadiene rubber, polyisoprene rubber, isobutylene rubber, isobutylene-isoprene rubber, styrene-butadiene rubber, styrene-isoprene rubber, styrene-isoprene-butadiene rubber, end-modified styrene-butadiene rubber, chloroprene rubber, nitrile rubber, ethylene-propylene rubber, propylene-butylene rubber, ethylene-propylene-diene rubber, and acrylonitrile-butadiene rubber.

[13] The rubber composition according to any one of [1] to [12], wherein the rubber composition is for treads of tires.

[14] A tire comprising a tread using the rubber composition of any one of [1] to [13].

[15] A method for producing a rubber composition, comprising the steps of:

(i) irradiating a vinyl alcohol polymer (B-1) with an active energy ray;
(ii) graft polymerizing the vinyl alcohol polymer (B-1) after the active energy ray irradiation by dispersing the vinyl alcohol polymer (B-1) in a raw material monomer of a diene polymer (B-2) or in a solution containing the monomer; and
(iii) mixing a rubber component (C) with a graft copolymer (B1) formed in said step (ii) from the vinyl alcohol polymer (B-1) and the diene polymer (B-2),

the rubber composition comprising 1 to 20 parts by mass of the graft copolymer (B1) relative to 100 parts by mass of the rubber component (C).

[16] The method for producing a rubber composition according to [15], wherein, in said step (iii), an unreacted part of the vinyl alcohol polymer (B-1) in said step (ii) is mixed as a vinyl alcohol polymer (A) with the graft copolymer (B1) and the rubber component (C).

Advantageous Effects of Invention

The present invention can provide a rubber composition capable of exhibiting superior moldability and wear resistance while maintaining grip performance, or tires therewith. The present invention can greatly improve grip performance, particularly grip performance on ice.

DESCRIPTION OF EMBODIMENTS

A rubber composition of the present invention comprises: a copolymer (B) constituted of a vinyl alcohol polymer (B-1) region and a diene polymer (B-2) region; and a rubber component (C), wherein the rubber composition comprises 1 to 20 parts by mass of the copolymer (B) relative to 100 parts by mass of the rubber component (C).

Copolymer (B)

The copolymer (B) is constituted of a vinyl alcohol polymer (B-1) region and a diene polymer (B-2) region. The copolymer (B) is not particularly limited, as long as it is a copolymer having at least one vinyl alcohol polymer (B-1) region, and at least one diene polymer (B-2) region. The copolymer (B) is, for example, a graft copolymer (B1) or a block copolymer (B2).

Graft Copolymer (B1)

The copolymer (B) is preferably a graft copolymer (B1). The structure of the graft copolymer (B1) is not particularly limited. It is, however, preferable that the graft copolymer (B1) be constituted of a main chain formed by a vinyl alcohol polymer (B-1) region, and a side chain formed by a diene polymer (B-2) region. That is, the graft copolymer (B1) is preferably one in which a side chain formed by a diene polymer (B-2) region is introduced into a main chain formed by a vinyl alcohol polymer (B-1). Particularly preferably, the graft copolymer (B1) is one in which a plurality of diene polymer (B-2) regions is attached to a single vinyl alcohol polymer (B-1) region. The type of vinyl alcohol polymer (B-1) is not particularly limited. For example, the vinyl alcohol polymer (B-1) is preferably polyvinyl alcohol or an ethylene-vinyl alcohol copolymer, as described below. The vinyl alcohol polymer (B-1) has a vinyl alcohol unit content of preferably 40 mol% or more. The vinyl alcohol unit content may be 50 mol% or more, or 55 mol% or more. The vinyl alcohol polymer (B-1) may be polyvinyl alcohol or an ethylene-vinyl alcohol copolymer used alone, or may be a combination of more than one polyvinyl alcohol and/or more than one ethylene-vinyl alcohol copolymer. In the present invention, a "structure unit" of a polymer means a repeating unit of a polymer. For example, "ethylene unit" and "vinyl alcohol unit" are both structure units.

Block Copolymer (B2)

In the case where the copolymer (B) is a block copolymer (B2), the block copolymer (B2) has the vinyl alcohol polymer (B-1) region as a polymer block (b1), and the diene polymer (B-2) region as a polymer block (b2). The block copolymer (B2) may have one polymer block (b1) and one polymer block (b2), or may have two or more polymer blocks (b1) and/or two or more polymer blocks (b2). As to the form of linkage, the block copolymer may be, for example, a linear multiblock copolymer such as a b1-b2 diblock copolymer, a b1-b2-b1 triblock copolymer, a b2-b1-b2 triblock copolymer, a b1-b2-b1-b2 tetrablock copolymer, or a b2-b1-b2-b1 tetrablock copolymer, or may be a star-shaped (radial star) block copolymer represented by, for example, (b2-b1-)n or (b1-b2-)n, where n is a number greater than two.

The viscosity-average degree of polymerization of the polyvinyl alcohol (measured in compliance with JIS K 6726 (1994)) is not particularly limited, and is preferably 100 to 10,000, more preferably 200 to 7,000, even more preferably 300 to 5,000. The rubber composition obtained can have improved mechanical strength with a viscosity-average degree of polymerization confined within these ranges. In the vinyl alcohol polymer (B-1), the viscosity-average degree of polymerization can be adjusted according to the desired number average molecular weight of copolymer (B).

The degree of saponification of the polyvinyl alcohol (measured in compliance with JIS K 6726 (1994)) is not particularly limited. However, in view of providing superior wear resistance and grip performance for a rubber composition of the present invention, the degree of saponification of the polyvinyl alcohol is preferably 50 mol% or more, more preferably 80 mol% or more, even more preferably 95 mol% or more. The degree of saponification of the polyvinyl alcohol may be 100 mol%.

The content of the ethylene unit in the ethylene-vinyl alcohol copolymer is not particularly limited. However, for ease of production and in view of providing superior wear resistance and grip performance for a rubber composition of the present invention, the ethylene unit content of the ethylene-vinyl alcohol copolymer is preferably 10 to 60 mol%, more preferably 20 to 50 mol%. The ethylene unit content of the ethylene-vinyl alcohol copolymer can be determined by $^1$H-NMR measurement.

The degree of saponification of the ethylene-vinyl alcohol copolymer is not particularly limited. However, in view of providing superior moldability, wear resistance, and grip performance for a rubber composition of the present invention, the degree of saponification of the ethylene-vinyl alcohol copolymer is preferably 90 mol% or more, more preferably 95 mol% or more, even more preferably 99 mol% or more. The degree of saponification of the ethylene-vinyl alcohol copolymer may be 100 mol%. The degree of saponification of the ethylene-vinyl alcohol copolymer can be determined in compliance with JIS K 6726 (1994).

The melt flow rate (MFR) of the ethylene-vinyl alcohol copolymer (210°C, a 2,160 g load) is not particularly limited, and is preferably at least 0.1 g/10 min, more preferably at least 0.5 g/10 min. The ethylene-vinyl alcohol copolymer can have superior water resistance and mechanical strength with a melt flow rate of at least 0.1 g/10 min. The upper limit of melt flow rate may adopt a commonly used value, and may be, for example, at most 25 g/10 min. The melt flow rate refers to a value measured in compliance with ASTM D1238 under 210°C, 2,160 g load conditions using a melt indexer.

The polyvinyl alcohol and the ethylene-vinyl alcohol copolymer may comprise a structure unit (x) other than the vinyl alcohol unit, vinyl ester monomer unit, and ethylene unit, provided that it is not detrimental to the effects of the present invention.

Examples of the structure unit (x) include structure units derived from the following:

α-olefins such as propylene, n-butene, isobutylene, and 1-hexene (including ethylene in the case of polyvinyl alcohol); acrylic acid;

unsaturated monomers having an acrylic acid ester group, such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate;

methacrylic acid;

unsaturated monomers having a methacrylic acid ester group, such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate;

acrylamides such as acrylamide, N-methylacrylamide, N-ethylacrylamide, N,N-dimethylacrylamide, diacetoneacrylamide, acrylamidepropanesulfonic acid, and acrylamidepropyldimethylamine;

methacrylamides such as methacrylamide, N-methylmethacrylamide, N-ethylmethacrylamide, methacrylamidepropanesulfonic acid, and methacrylamidepropyldimethylamine;

vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyl vinyl ether, and 2,3-diacetoxy-1-vinyloxypropane;

unsaturated nitriles such as acrylonitrile, and methacrylonitrile;

vinyl halides such as vinyl chloride, and vinyl fluoride;

vinylidene halides such as vinylidene chloride, and vinylidene fluoride;

allyl compounds such as allyl acetate, 2,3-diacetoxy-1-allyloxypropane, and allyl chloride;

unsaturated dicarboxylic acids such as maleic acid, itaconic acid, and fumaric acid, and salts or esters thereof;

vinyl silyl compounds such as vinyltrimethoxysilane; and

isopropenyl acetate.

The content of the structure unit (x) is preferably less than 10 mol%, more preferably less than 5 mol% relative to all structure units constituting the polyvinyl alcohol or the ethylene-vinyl alcohol copolymer.

Particularly preferred for use as vinyl alcohol polymer (B-1) is an ethylene-vinyl alcohol copolymer. The moldability, wear resistance, and grip performance of the rubber composition can more easily improve by using an ethylene-vinyl alcohol copolymer.

Diene Polymer (B-2)

The graft copolymer (B1) comprises a side chain formed by a diene polymer (B-2) region. The structure of the diene polymer (B-2) is not particularly limited; however, the diene polymer (B-2) preferably has an olefin structure. With the diene polymer (B-2) having an olefin structure, a rubber composition of the present invention can become crosslinked in response to high-energy rays such as ionizing radiation (e.g., γ rays), or can be crosslinked or vulcanized under heat. Examples of the diene polymer (B-2) include polybutadiene, polyisoprene, polyisobutylene, polychloroprene, and polyfarnesene. These may be used alone, or two or more thereof may be used in combination. The diene polymer (B-2) may be a copolymer of two or more kinds of monomers selected from the group consisting of butadiene, isoprene, isobutylene, chloroprene, and farnesene. Preferred in view of reactivity and flexibility are polybutadiene, polyisoprene, and polyisobutylene, of which polyisoprene is more preferred. The graft copolymer (B1) may have a side chain with a structure unit other than the diene polymer (B-2) region, provided that it does not interfere with the effects of the present invention.

In a rubber composition of the present invention, the diene polymer (B-2) region in the graft copolymer (B1) exists preferably as a side chain, and, preferably, the diene polymer (B-2), in part or as a whole, is directly attached to a carbon atom constituting the main chain formed by the vinyl alcohol polymer (B-1), preferably a secondary or a tertiary carbon atom constituting the main chain. A rubber composition of the present invention can have even superior moldability, wear resistance, and grip performance when the side chain, in part or as a whole, is directly attached to a secondary carbon atom or a tertiary carbon atom.

The content of the diene polymer (B-2) region relative to the total mass of the vinyl alcohol polymer (B-1) region and the diene polymer (B-2) region in the copolymer (B) is not particularly limited, and is preferably 30 mass% or more, more preferably 40 mass% or more, even more preferably 45 mass% or more. The content of the diene polymer (B-2) region is preferably 80 mass% or less, more preferably 76 mass% or less, even more preferably 70 mass% or less.

When the content of the diene polymer (B-2) region is 30 mass% or more, the desired flexibility and reactivity can more easily be obtained in the copolymer (B) (particularly, the graft copolymer (B1)). When the content of the diene polymer (B-2) region is 80 mass% or less, vinyl alcohol polymer (A) and copolymer (B) can have improved compatibility in an embodiment comprising vinyl alcohol polymer (A), and it becomes easier to inhibit deterioration of transparency and other properties.

In copolymer (B), the content of the vinyl alcohol unit relative to the total mass of the vinyl alcohol polymer (B-1) region and the diene polymer (B-2) region preferably ranges from 15 mass% to 60 mass%. With a vinyl alcohol unit content of 15 mass% or more, vinyl alcohol polymer (A) and copolymer (B) can have improved compatibility, and the transparency improves in an embodiment comprising vinyl alcohol polymer (A). With a vinyl alcohol unit content of 60 mass% or less, it becomes easier to reduce decrease of matrix crystallinity, and inhibit deterioration of various properties due to decrease of matrix crystallinity. The vinyl alcohol unit content is more preferably 17 to 50 mass%, even more preferably 18 to 45 mass%, particularly preferably 20 to 40 mass%. The method of measurement of vinyl alcohol unit content is as described in the EXAMPLES section below.

In graft copolymer (B1), it is preferable that the side chain formed by the diene polymer (B-2) region have a molecular weight distribution. With a molecular weight distribution in the side chain formed by the diene polymer (B-2) region, the compatibility between vinyl alcohol polymer (A) and graft copolymer (B1) tends to improve, and the transparency after molding tends to increase in an embodiment comprising vinyl alcohol polymer (A).

The copolymer (B) has an average particle diameter of preferably 50 to 3,000 μm. In view of further improvements of moldability, wear resistance, and grip performance, the average particle diameter of copolymer (B) is more preferably 80 to 2,000 μm, even more preferably 100 to 1,500 μm. The method of measurement of average particle diameter is as described in the EXAMPLES section below.

The content of copolymer (B) is preferably 0.1 to 20 mass%, more preferably 0.2 to 10 mass%, even more preferably 0.5 to 5 mass% relative to the total amount of the rubber composition. With the copolymer (B) content confined in these ranges, the moldability, wear resistance, and grip performance tend to improve.

Vinyl Alcohol Polymer (A)

The rubber composition of the present invention may further comprise a vinyl alcohol polymer (A). The type of vinyl alcohol polymer (A) is not particularly limited. For example, the vinyl alcohol polymer (A) is preferably polyvinyl alcohol or an ethylene-vinyl alcohol copolymer. In the vinyl alcohol polymer (A), the viscosity-average degree of polymerization and the degree of saponification of the polyvinyl alcohol or ethylene-vinyl alcohol copolymer, and the ethylene unit content and the melt flow rate of the ethylene-vinyl alcohol copolymer are the same as in the polyvinyl alcohol and ethylene-vinyl alcohol copolymer described above in conjunction with copolymer (B). The vinyl alcohol polymer (A) and the vinyl alcohol polymer (B-1) may be the same or different with regard to properties such as the structure unit of the polymer, and the viscosity-average degree of polymerization and the degree of saponification of the polymer. The vinyl alcohol polymer (A) has a vinyl alcohol unit content of preferably 40 mol% or more. The vinyl alcohol unit content of the vinyl alcohol polymer (A) may be 50 mol% or more, or 55 mol% or more.

In a rubber composition of the present invention further comprising a vinyl alcohol polymer (A), the content of vinyl alcohol polymer (A) is preferably 1 to 20 parts by mass relative to 100 parts by mass of the rubber component (C). In view of further improvements of moldability, wear resistance, and grip performance, the content of vinyl alcohol polymer (A) is more preferably 1 to 15 parts by mass, even more preferably 1 to 10 parts by mass.

In a rubber composition of the present invention further comprising a vinyl alcohol polymer (A), the content of copolymer (B) relative to total 100 parts by mass of vinyl alcohol polymer (A) and copolymer (B) is preferably 10 to 90 mass%. In view of further improvements of moldability, wear resistance, and grip performance, the content of copolymer (B) is more preferably 30 to 85 mass%, even more preferably 50 to 80 mass%.

A rubber composition of the present invention further comprising a vinyl alcohol polymer (A) has a volume average particle diameter of preferably 50 to 3,000 μm as measured for a composition of solely vinyl alcohol polymer (A) and copolymer (B) dispersed in methanol. In view of further improvements of moldability, wear resistance, and grip performance, the volume average particle diameter is more preferably 80 to 2,000 μm, even more preferably 100 to 1,500 μm, most preferably 100 to 700 μm. The method of measurement of volume average particle diameter is as described in the EXAMPLES section below.

Rubber Component (C)

The rubber component (C) may be a synthetic rubber (C-1) industrially produced from materials such as natural rubber and/or petroleum. Natural rubber excels in mechanical strength (e.g., tearing strength) and fatigue resistance, whereas synthetic rubber (C-1) provides superior wear resistance. These rubbers can thus be mixed as desired for the intended purpose.

Natural Rubber

The type of natural rubber is not particularly limited, and natural rubber may be used in the form of, for example, a natural rubber latex, or a sheet rubber or block rubber obtained by coagulating and drying natural rubber latex. The main component of natural rubber may be, for example, polyisoprene.

Examples of the sheet rubber include those listed in International Standards of Quality and Packing for Natural Rubber Grades (commonly known as The Green Book). Specific examples include ribbed smoke sheets (RSS) produced as smoke-dried sheets, crepes produced from a coagulated air dry sheet (ADS) after drying with hot air and subsequent thorough washing with water and hot-air drying, TC rubber (Technically Classified Rubber), SP rubber (Super Processing Rubber), MG rubber (modified rubber grafted with methyl methacrylate), PP crepes, and rubbers with additives (rubbers containing additives such as a softener and a peptizer).

Examples of the block rubber include Standard Malaysian Rubber (SMR) produced in Malaysia, Standard Indonesian Rubber (SIR) produced in Indonesia, Standard Thai Rubber (STR) produced in Thailand, Sri Lanka Rubber (SLR) produced in Sri Lanka, Standard Singapore Rubber (SSR) produced in Singapore, Standard Vietnamese Rubber (SVR) produced in Vietnam, Indian Standard Natural Rubber (ISNR) produced in India, and Standard China Rubber (SCR) produced in China.

It is also possible to use rubbers produced by coagulation of natural rubber latex after oxidation treatment. The oxidation of natural rubber latex can be achieved using known methods. For example, oxidation can be achieved by oxidizing natural rubber latex with air in an organic solvent dissolving 1 to 30 mass% of natural rubber latex, in the presence of a metal oxidation catalyst (see JP 8(1996)-81505 A). Alternatively, oxidation can be achieved with a carbonyl compound added to natural rubber latex (see JP 9(1997)-136903 A). In the case of air oxidation, oxidation may be carried out in the presence of a radical generator, for example, such as a peroxide radical generator, a redox radical generator, or an azo radical generator, in order to accelerate the reaction.

The natural rubber may be used alone, or two or more thereof may be used in combination.

Synthetic Rubber (C-1)

The synthetic rubber (C-1) is not particularly limited, and may be, for example, a diene rubber having a double bond within the molecule. Examples of such rubbers include polybutadiene rubber (such as 1,4-polybutadiene rubber, and 1,2-polybutadiene rubber), polyisoprene rubber (such as 1,4-polyisoprene rubber, and 3,4-polyisoprene rubber), isobutylene rubber, isobutylene-isoprene rubber (IIR), styrene-butadiene rubber (SBR), styrene-isoprene rubber, styrene-isoprene-butadiene rubber, end-modified styrene-butadiene rubber, chloroprene rubber, nitrile rubber, ethylene-propylene rubber, propylene-butylene rubber, ethylene-propylene-diene rubber, and acrylonitrile-butadiene rubber. The synthetic rubber (C-1) may be used alone, or two or more thereof may be used in combination.

In certain preferred embodiments, the rubber component (C) comprises the synthetic rubber (C-1). In other preferred embodiments, the rubber component (C) comprises natural rubber. The natural rubber content is not particularly limited, and is preferably 1 to 90 mass%, more preferably 2 to 80 mass%, even more preferably 5 to 60 mass%, particularly preferably 10 to 40 mass% relative to the total amount of rubber component (C).

The content of rubber component (C) is preferably 35 to 80 mass%, more preferably 40 to 70 mass%, even more preferably 40 to 60 mass% relative to the total amount of a rubber composition of the present invention. With the rubber component (C) content confined in these ranges, the rubber composition tends to have even superior moldability, wear resistance, and grip performance.

Inorganic Filler (D)

In view of improving reinforcement and providing even greater moldability, wear resistance, and grip performance, a rubber composition of the present invention preferably comprises an inorganic filler (D).

For example, the inorganic filler (D) is at least one selected from oxides of silicon, main-group metals, or transition metals; hydroxides of silicon, main-group metals, or transition metals; hydrates of these; carbonates of silicon, main-group metals, or transition metals; and carbon black. The inorganic filler (D) may be used alone, or two or more thereof may be used in combination. The inorganic filler (D) is preferably one that is compatible with the rubber component (C).

The inorganic filler (D) can be classified into reinforcement fillers used with the purpose of improving reinforcement, and non-reinforcement fillers used to add bulk or to improve workability such as ease of rolling or ease of extrusion.

Examples of the reinforcement fillers include silica, surface-treated clay, carbon black, mica, calcium carbonate (for example, activated ultrafine calcium carbonate; average primary particle diameter: 0.02 to 0.2 $\mu$m), aluminum hydroxide, aluminum oxide, and titanium oxide. Examples of the silica include wet silica (hydrous silicic acid), and dry silica (silicic anhydride). The silica has a BET specific surface area of preferably 40 to 350 $m^2$/g, more preferably 100 to 300 m²/g, even more preferably 150 to 250 m²/g. In certain embodiments, the inorganic filler (D) preferably comprises a reinforcement filler. For further improvement of the compatibility between rubber component (C) and inorganic filler (D), and in view of providing even greater moldability, wear resistance, and grip performance for a rubber composition of the present invention, it is preferable that the reinforcement filler comprise at least one selected from the group consisting of silica and carbon black. In the case where the rubber component (C) is containing natural rubber, it is preferable that the reinforcement filler comprise activated ultrafine calcium carbonate because it improves the compatibility with natural rubber, and provides even greater moldability and a sufficient reinforcing effect.

Examples of the non-reinforcement fillers include calcium carbonate (for example, heavy calcium carbonate having irregularly shaped particles, and light calcium carbonate having spindle-shaped particles; average primary particle diameter: 1 to 5 μm), clay, talc, diatomaceous earth, pulverized quartz, fused quartz, aluminosilicic acid, magnesium carbonate, zinc carbonate, calcium silicate, and iron(III) oxide.

The inorganic filler (D) may be a commercially available product, examples of which include carbon black products such as the Diablack® series, for example, Diablack® I, manufactured by Mitsubishi Chemical Corporation, and the SEAST® series manufactured by Tokai Carbon Co., Ltd.; and silica products such as the ULTRASIL® series, for example, ULTRASIL® 7000 GR, 9100 GR, manufactured by Evonik Japan Co., Ltd. Typically, the content of inorganic filler (D) is preferably 30 to 500 parts by mass, more preferably 50 to 300 parts by mass, even more preferably 80 to 200 parts by mass relative to 100 parts by mass of the rubber component (C).

Silane Coupling Agent (E)

In view of providing even greater moldability, wear resistance, and grip performance, a rubber composition of the present invention preferably comprises a silane coupling agent (E).

Examples of the silane coupling agent (E) include:

sulfide silane coupling agents such as bis(3-triethoxysilylpropyl)tetrasulfide, bis(3-trimethoxysilylpropyl)tetrasulfide, bis(3-methyldimethoxysilylpropyl)tetrasulfide, bis(2-triethoxysilylethyl)tetrasulfide, bis(3-triethoxysilylpropyl)disulfide, bis(3-trimethoxysilylpropyl)disulfide, bis(3-triethoxysilylpropyl)trisulfide, 3-trimethoxysilylpropyl-N,N-dimethylthiocarbamoyl tetrasulfide, 3-trimethoxysilylpropylbenzothiazolyl tetrasulfide, and 3-trimethoxysilylpropylmethacryloyl monosulfide;

thio silane coupling agents such as 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane;

mercapto silane coupling agents such as 3-mercaptopropyltrimethoxysilane, 3-mercaptopropyltriethoxysilane, and 3-mercaptopropylmethyldimethoxysilane;

amino silane silane coupling agents such as 3-aminopropyltrimethoxysilane, and 3-aminopropyltriethoxysilane; and epoxysilane silane coupling agents such as γ-glycidoxypropyltrimethoxysilane, and γ-glycidoxypropylmethyldiethoxysilane.

The silane coupling agent (E) may be used alone, or two or more thereof may be used in combination. The content of silane coupling agent (E) is preferably 0.1 to 50 parts by mass, more preferably 0.5 to 40 parts by mass, even more preferably 1 to 30 parts by mass relative to 100 parts by mass of the rubber component (C).

The rubber composition of the present invention may further comprise an oil (F). By mixing oil, the rubber composition can have even greater moldability, and can impart flexibility to tires, making the effects of the present invention even more desirable. Examples of the oil (F) include process oils, vegetable oils, or mixtures of these. In view of improving the compatibility with the rubber component (for example, SBR), the process oil may be, for example, a paraffin-base process oil, an aromatic process oil, or a naphthene-base process oil. Examples of the paraffin-base process oil include PW-32, PW-90, PW-150, and PS-32 manufactured by Idemitsu Kosan Co., Ltd.; and the TUDALEN® series, for example, TUDALEN® 3036, 11, 500TQ, 1903, 3909, and 1927, manufactured by H&R. Examples of the aromatic process oil include AC-12, AC-460, AH-16, AH-24, and AH-58 manufactured by Idemitsu Kosan Co., Ltd.; X-140 manufactured by Japan Energy Inc.; and the VIVATEC® series, for example, VIVATEC® 180, 400, and 500, manufactured by H&R. Examples of the naphthene-base process oil include the TUDALEN® series, for example, TUDALEN® 2081, 2082, 2083, 2088, 3244, 3245, 3248, 3247, 3249, 3250, 3251, 3257, 3258, 3259, 3261, 3262, 3263, 3268, and 4246, manufactured by H&R; and the NyfLex®, Nytex®, and Nypar® series manufactured by Nynas AB. Examples of the vegetable oils include castor oil, cottonseed oil, linseed oil, rapeseed oil, soy oil, palm oil, coconut oil, peanut oil, rosin, pine oil, pine tar, tall oil, corn oil, rice bran oil, safflower oil, sesame oil, olive oil, sunflower oil, palm kernel oil, tea seed oil, jojoba oil, macadamia nut oil, and wood oil. The oil (F) may be used alone, or two or more thereof may be used in combination. The oil (F) is preferably a process oil, more preferably an aromatic process oil because these oils make the effects of the present invention more desirable. Typically, the content of oil (F) is preferably 1 to 150 parts by mass, more preferably 5 to 100 parts by mass, even more preferably 10 to 70 parts by mass relative to 100 parts by mass of the rubber component (C).

A rubber composition of the present invention may comprise an additional resin (G). Examples of the additional resin (G) include polyamide resin, acrylic resin, polyolefinic resin, modified polyolefin resin, vinyl chloride resin, polylactic acid resin, and cellulose resin. The additional resin (G) may be used alone, or two or more thereof may be used in combination. In certain embodiments, a rubber composition of the present invention may be preferably essentially free of additional resin (G). Here, being essentially free of some component means that the content of the component in the rubber composition is less than 5 mass%, preferably less than 1 mass%, more preferably less than 0.1 mass%, even more preferably less than 0.01 mass%.

A rubber composition of the present invention has superior moldability, wear resistance, and grip performance, and can be used in a wide range of applications. The preferred use is for tires, more preferably for the tread of tires. A tire using a rubber composition of the present invention, and a tire using a rubber composition of the present invention for the tread have superior wear resistance and grip performance.

A method for producing a rubber composition of the present invention is not particularly limited. When the copolymer (B) is a graft copolymer (B1), a rubber composition of the present invention may be produced by, for example, generating a radical on a vinyl alcohol polymer and introducing a graft chain using various known graft polymerization methods, and mixing the resulting graft copolymer (B1) with a rubber component (C), and optionally with a vinyl alcohol polymer (A) in desired proportions. More specifically, a method may be used that comprises the steps of:

(i) irradiating a vinyl alcohol polymer (B-1) with an active energy ray;
(ii) graft polymerizing the vinyl alcohol polymer (B-1) after the active energy ray irradiation by dispersing the vinyl alcohol polymer (B-1) in a raw material monomer of a diene polymer (B-2) or in a solution containing the monomer; and
(iii) mixing a rubber component (C) with a graft copolymer (B1) formed in said step (ii) from the vinyl alcohol polymer (B-1) and the diene polymer (B-2),

the rubber composition comprising 1 to 20 parts by mass of the graft copolymer (B1) relative to 100 parts by mass of the rubber component (C). In said step (iii), an unreacted part of the vinyl alcohol polymer (B-1) in said step (ii) may be mixed as a vinyl alcohol polymer (A) with the graft copolymer (B1) and the rubber component (C).

The graft polymerization step (ii) may be achieved by, for example, graft polymerization through radical polymerization using a polymerization initiator, or graft polymerization through radical polymerization using an active energy ray (hereinafter, referred to as "active energy ray graft polymerization"). Preferred is the active energy ray graft polymerization. A preferred method of active energy ray graft polymerization comprises the steps of:

(i) irradiating a vinyl alcohol polymer (B-1) with an active energy ray in advance to generate a radical; and
(ii) graft polymerizing the vinyl alcohol polymer (B-1) after the active energy ray irradiation by dispersing the vinyl alcohol polymer (B-1) in a raw material monomer of a diene polymer (B-2) or in a solution containing the monomer.

The product of the method is a mixture of an unreacted vinyl alcohol polymer (B-1) and a graft copolymer (B1), and the unreacted vinyl alcohol polymer (B-1) corresponds to the vinyl alcohol polymer (A). The side chain of the graft copolymer (B1) obtained in the method is not uniform in terms of a molecular weight, and has a molecular weight distribution. Optionally, the vinyl alcohol polymer (A) may be added to the product of the active energy ray graft polymerization.

It has been confirmed that irradiation of vinyl alcohol polymer (B-1) with an active energy ray generates a radical on at least the carbon atom of the methine group of the vinyl alcohol unit. It follows from this that the raw material monomer of diene polymer (B-2) undergoes radical polymerization with the carbon atom of the methine group acting as a starting end, and this produces a graft copolymer (B1) in which the side chain formed by the diene polymer (B-2) is directly attached to the tertiary carbon atom of the main chain formed by the vinyl alcohol polymer (B-1). Irradiation of the ethylene-vinyl alcohol copolymer with an active energy ray appears to generate a radical also on the carbon atom of the methylene group of the ethylene unit. Conceivably, the raw material monomer of diene polymer (B-2) undergoes radical polymerization with the carbon atom of the methylene group acting as a starting end, and produces a graft copolymer (B1) in which the side chain formed by the diene polymer (B-2) is directly attached to the secondary carbon atom of the main chain formed by the vinyl alcohol polymer (B-1).

In the method of production discussed above, it is preferable that, in step (i), the active energy ray be applied to a vinyl alcohol polymer (B-1) having a water content of 15 mass% or less. The water content is preferably 5 mass% or less, more preferably 3 mass% or less. With a water content of 15 mass% or less, the radicals generated on the vinyl alcohol polymer (B-1) do not quickly disappear, and the vinyl alcohol polymer (B-1) can remain more reactive to the raw material monomer of diene polymer (B-2).

Examples of the active energy ray applied to the vinyl alcohol polymer (B-1) include ionizing radiation (such as α rays, β rays, γ rays, electron rays, and ultraviolet rays), X-rays, g-line, i-line, and an excimer laser. The preferred active energy ray is ionizing radiation. For practicality, electron rays and γ rays are more preferred, and electron rays are even more preferred because of faster processing speeds and simpler equipment.

The irradiation dose of an active energy ray applied to the vinyl alcohol polymer (B-1) is preferably 5 to 200 kGy, more preferably 10 to 150 kGy, even more preferably 20 to 100 kGy, particularly preferably 30 to 90 kGy. An irradiation dose of 5 kGy or more makes it easier to introduce sufficient amounts of side chains. An irradiation dose of 200 kGy or less usually has the cost advantage, and makes it easier to reduce deterioration of vinyl alcohol polymer (B-1) due to application of an active energy ray.

The shape of vinyl alcohol polymer (B-1) is not particularly limited. However, the vinyl alcohol polymer (B-1) has a form of preferably a powder or a pellet with an average particle diameter of 50 to 4,000 μm. With these shapes, the vinyl alcohol polymer (B-1) can more efficiently contact the raw material monomer of diene polymer or a solution containing the monomer, and the reaction rate tends to increase. An average particle diameter of 50 μm or more tends to reduce the occurrence of powder scattering, whereas the reaction rate tends to increase with an average particle diameter of 4,000 μm or less. The average particle diameter is more preferably 60 to 3,500 μm, even more preferably 80 to 3,000 μm. The average particle diameter can be determined as a volume average particle diameter measured for particles dispersed in methanol, using a laser diffraction particle size analyzer LA-950V2 manufactured by Horiba Ltd.

In the case of graft polymerization performed by dispersing vinyl alcohol polymer (B-1) in a solution containing a raw material monomer of diene polymer (B-2) after irradiation of vinyl alcohol polymer (B-1) with an active energy ray, the solvent used for dispersion needs to be a solvent that dissolves the raw material monomer of diene polymer (B-2) but does not dissolve the vinyl alcohol polymer (B-1) irradiated with an active energy ray. If the solvent is one that dissolves the vinyl alcohol polymer (B-1) irradiated with an active energy ray, graft polymerization takes place simultaneously with deactivation of radicals generated on the vinyl alcohol polymer (B-1). This makes it difficult to control the amount of monomer added. Examples of the dispersing solvent include water; lower alcohols such as methanol, ethanol, and isopropanol; ethers such as tetrahydrofuran, dioxane, and diethyl ether; ketones such as acetone, and methyl ethyl ketone; amides such as dimethylformamide, and dimethylacetoamide; and toluene and hexane. When using water, water may be used with a surfactant or other optional component to disperse the monomer. Two or more of the dispersing solvents may be used in combination.

In step (ii), the vinyl alcohol polymer (B-1) swells in response to active energy ray irradiation, allowing the raw material monomer of diene polymer (B-2) to penetrate into the vinyl alcohol polymer (B-1), and enabling introduction of large amounts of side chains formed by the diene polymer (B-2). It is therefore preferable to select a dispersing solvent taking into consideration the compatibility with the vinyl alcohol polymer (B-1) irradiated with an active energy ray. Preferred among the foregoing dispersing solvents are the lower alcohols (e.g., methanol, ethanol, and isopropanol) because these solvents are highly compatible with the vinyl alcohol polymer (B-1) irradiated with an active energy ray, and can preferably be used in a producing method of the present invention. For the same reason, it is also effective to use a mixture of the dispersing solvents as a liquid medium, provided that it does not dissolve the vinyl alcohol polymer (B-1) irradiated with an active energy ray. Excessively high compatibility between such a liquid medium and the vinyl alcohol polymer (B-1) results in serious swelling of the resin after the reaction. This makes it difficult to perform isolation by filtration, and encourages the raw material monomer of diene polymer (B-2) to undergo homopolymerization. It is therefore preferable that the dispersing solvent be appropriately selected taking into consideration the compatibility with the vinyl alcohol polymer (B-1) used, and the extent of swelling at the temperature of reaction (described later).

In step (ii), the amount of the raw material monomer of diene polymer (B-2) is appropriately adjusted according to the reactivity of the monomer. As discussed above, the reactivity depends on factors such as how easily the monomer penetrates into the vinyl alcohol polymer (B-1). Accordingly, the appropriate amount of monomer varies with factors such as the type or amount of dispersing solvent, and the degree of polymerization or degree of saponification of the vinyl alcohol polymer (B-1). However, the monomer amount is preferably 1 to 1,000 parts by mass relative to 100 parts by mass of the vinyl alcohol polymer (B-1) irradiated with an active energy ray. With the amount of the raw material monomer of diene polymer (B-2) falling in this range, it becomes easier to control the proportions of the vinyl alcohol polymer (B-1) and the diene polymer (B-2) in the graft copolymer (B1) within the foregoing ranges. The monomer amount is more preferably 2 to 900 parts by mass, even more preferably 5 to 800 parts by mass.

In step (ii), the liquid medium is used in an amount of preferably 100 to 4,000 parts by mass, more preferably 200 to 2,000 parts by mass, even more preferably 300 to 1,500 parts by mass relative to 100 parts by mass of the vinyl alcohol polymer (B-1) irradiated with an active energy ray.

In step (ii), the reaction temperature is preferably 20°C to 150°C, more preferably 30°C to 120°C, even more preferably 40°C to 100°C. Graft polymerization reaction can more easily proceed with a reaction temperature of 20°C or more. The vinyl alcohol polymer (B-1) does not easily undergo thermal melting when the reaction temperature is 150°C or less. When the boiling point of the raw material monomer of diene polymer (B-2), or the boiling point of the liquid medium is lower than the reaction temperature, the reaction may be carried out under applied pressure in a pressure tight vessel such as an autoclave.

In step (ii), the reaction time is preferably within 10 hours, more preferably within 8 hours, even more preferably within 6 hours. With a reaction time of 10 hours or less, homopolymerization of the raw material monomer of diene polymer (B-2) can more easily be inhibited.

The present invention encompasses embodiments combining the foregoing features, provided that such combinations made in various forms within the technical idea of the present invention can produce the effects of the present invention.

EXAMPLES

The following describes the present invention in greater detail by way of Examples. It should be noted that the present invention is in no way limited by the following Examples, and various changes may be made by a person with ordinary skill in the art within the technical idea of the present invention. In the following Examples and Comparative Examples, "%" and "part(s)" are "mass%" and "part(s) by mass", respectively, unless otherwise specifically stated.

The components used in Examples and Comparative Examples are as follows.

Rubber Component (C)

SBR: Styrene-butadiene rubber (JSR1500, manufactured by JSR)
Natural rubber: STR 20 (Standard Thai Rubber, produced in Thailand)

Inorganic Filler (D)

Carbon black: Diablack® I (manufactured by Mitsubishi Chemical Corporation; average particle diameter: 20 nm)
Silica: ULTRASIL® 7000 GR (manufactured by Evonik Japan Co., Ltd.; wet silica, BET specific surface area: 170 $m^2$/g, average particle diameter: 14 nm)

Silane Coupling Agent (E)

Silane coupling agent: EVONIK® Si 75 (manufactured by Evonik Japan Co., Ltd.)

Oil (F)

TDAE: VIVATEC® 500 (manufactured by H&R)

Cross-Linking Agent

Sulfur: Fine sulfur powder, 200 mesh (manufactured by Tsurumi Chemical Industry Co., Ltd.)

Vulcanization Auxiliary Agent

A mixture of the following two products was used.

Stearic acid: Lunac S-20 (manufactured by Kao Corporation; 2.0 parts by mass)
Zinc white: Zinc oxide (manufactured by Sakai Chemical Industry Co., Ltd.; 3.5 parts by mass

Vulcanization Accelerator

A mixture of the following three products was used.

Vulcanization accelerator (1): Nocceler CZ (manufactured by Ouchi Shinko Chemical Industrial Co., Ltd.; 0.45 parts by mass

Vulcanization accelerator (2): Nocceler D (manufactured by Ouchi Shinko Chemical Industrial Co., Ltd.; 0.65 parts by mass

Vulcanization accelerator (3): Nocceler TBT-N (manufactured by Ouchi Shinko Chemical Industrial Co., Ltd.; 1.0 part by mass

Calculation of Content (mass%) of Graft Copolymer (B1) Relative to Total 100 Parts by Mass of Vinyl Alcohol Polymer (A) and Graft Copolymer (B1) in Resin Compositions Obtained in Synthesis Examples 1 to 4

The resin composition obtained in the graft polymerization reaction described below was added to an extraction solvent (a 4:6 mixture of water and isopropanol (mass ratio)), and extracted at 80°C for 3 hours. After concentrating the extract, the mass of the extracted substance and the mass of the unextracted residue were measured. The mass of the extracted substance is the mass (Wa) of the vinyl alcohol polymer (A) contained in the resin composition, and the mass of the unextracted residue is the mass (Wb) of the graft copolymer (B1) contained in the resin composition. These masses were the used to calculate the mass ratio (A)/(B), and the content (mass%) of the graft copolymer (B1) relative to total 100 parts by mass of the vinyl alcohol polymer (A) and the graft copolymer (B1). In was confirmed by $^1$H-NMR analysis that the extract obtained in this process did not contain graft copolymer (B1), but contained only the vinyl alcohol polymer (A).

Calculation of Mass Ratio of Main Chain and Side Chain of Graft Copolymer (B1) of Synthesis Examples 1 to 4

The mass of the resin composition obtained in the graft polymerization reaction described below was denoted as Wab, and the difference between Wab and the mass of the vinyl alcohol polymer (B-1) used for reaction was denoted as Wq. The mass of vinyl alcohol polymer (A) calculated by the method described above was denoted as Wa, and the difference Wab-Wa was calculated as the mass Wb of the graft copolymer. The mass ratio of main chain and side chain was then calculated using Wb-Wq as the mass of the main chain, and Wq as the mass of the side chain. In the graft copolymers of Examples, the main chain is formed by ethylene-vinyl alcohol copolymer, and the side chain is formed by diene rubber.

Calculation of Total Degree of Modification of Diene Polymer in Resin Compositions of Synthesis Examples 1 to 4

In the Case of Vinyl Alcohol Polymer (A) being Polyvinyl Alcohol

The vinyl acetate unit and vinyl alcohol unit of the raw material polyvinyl alcohol were denoted as $a^1$ and $b^1$, respectively, in mass%. The total degree of modification (the content of graft polymerized monomer relative to all monomer units of the resin composition) was calculated using the following formula.

$$\text{Degree of modification [mol\%]} = Z^1/(X^1 + Y^1 + Z^1) \times 100,$$

where $X^1$, $Y^1$, and $Z^1$ are values calculated from the following formulae.

$X^1 = \{(\text{raw material polyvinyl alcohol (parts by mass)}) \times (a^1/100)\}/86$

$Y^1 = \{(\text{raw material polyvinyl alcohol (parts by mass)}) \times (b^1/100)\}/44$

$Z^1 = \{(\text{resin composition after reaction (parts by mass)}) - (\text{raw material polyvinyl alcohol (parts by mass)})\}/(\text{molecular weight of monomer to be graft polymerized})$

In the Case of Vinyl Alcohol Polymer (A) being Ethylene-Vinyl Alcohol Copolymer

The ethylene unit and vinyl alcohol unit of the raw material ethylene-vinyl alcohol copolymer were denoted as $a^2$ and $b^2$, respectively, in mass%. The total degree of modification (the content of graft polymerized monomer relative to all monomer units of the resin composition) was calculated using the following formula.

$$\text{Degree of modification [mol\%]} = Z^2/(X^2 + Y^2 + Z^2) \times 100,$$

where $X^2$, $Y^2$, and $Z^2$ are values calculated from the following formulae.

$X^2 = \{(\text{raw material ethylene-vinyl alcohol copolymer (parts by mass)}) \times (a^2/100)\}/28$

$Y^2 = \{(\text{raw material ethylene-vinyl alcohol copolymer (parts by mass)}) \times (b^2/100)\}/44$

$Z^2 = \{(\text{resin composition after reaction (parts by mass)}) - (\text{raw material ethylene-vinyl alcohol copolymer (parts by mass)})\}/(\text{molecular weight of monomer to be grafted polymerized})$

Calculation of Vinyl Alcohol Unit Content in Graft Copolymer (B1)

The content of vinyl alcohol unit was calculated using Wb (mass of graft copolymer (B1)), Wb-Wq (mass of the main chain formed by vinyl alcohol polymer in graft copolymer (B1)), $b^1$ (mass% of vinyl alcohol unit in polyvinyl alcohol), and $b^2$ (mass% of vinyl alcohol unit in ethylene-vinyl alcohol copolymer), as follows.

In the case of vinyl alcohol polymer (B-1) being polyvinyl alcohol

$$\text{Vinyl alcohol unit content [\%]} = \{(\text{Wb-Wq}) \times b^1/100\}/\text{Wb} \times 100$$

In the case of vinyl alcohol polymer (B-1) being ethylene-vinyl alcohol copolymer

$$\text{Vinyl alcohol unit content [\%]} = \{(\text{Wb-Wq}) \times b^2/100\}/\text{Wb} \times 100$$

Calculation of Average Particle Diameter

The resin compositions obtained in Synthesis Examples 1, 2, and 4 were dispersed in methanol, and measured for volume average particle diameter using a laser diffraction particle size analyzer LA-950V2 manufactured by Horiba Ltd.

Evaluation of Mooney Viscosity

The rubber compositions obtained in Examples 1 to 4 and Comparative Examples 1 to 3 were measured for Mooney viscosity at 130°C (after 4 minutes from start of rotation following 1-minute preliminary heating) as an index of moldability of the rubber compositions in compliance with JIS K 6300-1:2013. In Table 2, the values for Examples 1 to 4 and Comparative Examples 1 to 3 are values relative to the value of Comparative Example 1 taken as 100. Smaller values indicate more desirable moldability.

Evaluation of Wear Resistance

A wear mass was measured as an index of wear resistance of a tire. The measurement was made by conducting a DIN abrasion test under a 10 N load with a wear distance of 40 m in compliance with JIS K 6264-2:2005. In Table 2, the values for Examples 1 to 4 and Comparative Examples 1 to 3 are inverses of the wear masses measured in the DIN abrasion test, relative to the value of Comparative Example 1 taken as 100. Larger values indicate more desirable wear resistance.

Evaluation of Wet Grip Performance

Wet grip performance was evaluated as an index of tire grip performance. For evaluation, cylindrical specimens obtained in Examples 1 to 4 and Comparative Examples 1 to 3 were used for the measurement of coefficient of friction, and a coefficient of friction on a wet road surface was measured using the measurement apparatus and measurement conditions below. Coefficients of friction were measured over a range of slip rates from 0% to 40% between tire and road surface, and the maximum value of the measured coefficients of friction was determined as the wet-road coefficient of friction. Larger values of wet-road coefficients of friction indicate more desirable wet grip performance. In Table 2, the values for Examples 1 to 4 and Comparative Examples 1 to 3 are values relative to the value of Comparative Example 1 taken as 100. Larger values indicate more desirable wet grip performance.

Measurement Apparatus and Measurement Conditions

Apparatus: RTM friction tester, manufactured by Ueshima Seisakusho Co., Ltd.
Measurement temperature: 20°C

Road surface: METABRIT manufactured by Noritake Coated Abrasive Co., Ltd.; grain size: 120, abrasive grain A
Rate of supplied water to road surface: 0.5 L/min
Temperature of supplied water to road surface: 20°C
Velocity: 30 km/hr
Load: 50 N
Slip rate: 0 to 40%
Slip angle: 0°

Evaluation of Ice Grip Performance

Grip performance on ice was evaluated as another index of tire grip performance. For evaluation, cylindrical specimens obtained in Examples 1 to 4 and Comparative Examples 1 to 3 were used for the measurement of coefficient of friction, and a coefficient of friction on ice was measured using the measurement apparatus and measurement conditions below. Coefficients of friction were measured over a range of slip rates from 0% to 40% between tire and road surface, and the maximum value of the measured coefficients of friction was determined as the coefficient of friction on ice. Larger values of coefficients of friction on ice indicate more desirable ice grip performance. In Table 2, the values for Examples 1 to 4 and Comparative Examples 1 to 3 are values relative to the value of Comparative Example 1 taken as 100. Larger values indicate more desirable ice grip performance.

Measurement Apparatus and Measurement Conditions

Apparatus: RTM friction tester, manufactured by Ueshima Seisakusho Co., Ltd.
Measurement temperature: -3.0°C
Road surface: Ice
Velocity: 30 km/hr
Load: 50 N
Slip rate: 0 to 40%
Slip angle: 0°

Synthesis Example 1

A commercially available ethylene-vinyl alcohol copolymer (E105 manufactured by Kuraray Co., Ltd.; ethylene unit content: 44 mol%, mass fraction of ethylene: 33.3 mass%, mass fraction of vinyl alcohol unit: 66.7 mass%) was pulverized, and classified with a 75 $\mu$m mesh sieve and a 212 $\mu$m mesh sieve to obtain particles having a particle size distribution of 75 $\mu$m to 212 $\mu$m. After classification, 100 parts by mass of the particles was irradiated with an electron beam (30 kGy) (step (i)). Separately, 540 parts by mass of isoprene was charged into an autoclave equipped with a stirrer, a nitrogen conduit, and a particle feed port, and inside of the system was replaced with nitrogen for 30 minutes by bubbling nitrogen in an ice-cooled state. The autoclave was then charged with 100 parts by mass of the ethylene-vinyl alcohol copolymer that had been irradiated with an electron beam, and, after sealing the autoclave, the whole was heated until the inner temperature reached 65°C. With the particles being dispersed in the liquid, the mixture was continuously heated for 5 hours with stirring to allow graft polymerization (step (ii)). After filtration, the collected particles were rinsed with tetrahydrofuran, and dried overnight in a vacuum at 40°C to yield a resin composition containing vinyl alcohol polymer (A) and graft copolymer (B1). Details are shown in Table 1.

Synthesis Example 2

A commercially available ethylene-vinyl alcohol copolymer (E105 manufactured by Kuraray Co., Ltd.; ethylene unit content: 44 mol%, mass fraction of ethylene: 33.3 mass%, mass fraction of vinyl alcohol: 66.7 mass%) was pulverized, and classified with a 75 $\mu$m mesh sieve and a 212 $\mu$m mesh sieve to obtain particles having a particle size distribution of 75 $\mu$m to 212 $\mu$m. After classification, 100 parts by mass of the particles was irradiated with an electron beam (30 kGy) (step (i)). Thereafter, 100 parts by mass of the ethylene-vinyl alcohol copolymer irradiated with an electron beam was charged into an autoclave equipped with a stirrer, a nitrogen conduit, and a particle feed port, and inside of the system was replaced with nitrogen by repeating the cycle of nitrogen sealing and system depressurization 5 times. The autoclave was then charged with 250 parts by mass of liquefied butadiene, and, after sealing the autoclave, the whole was heated until the inner temperature reached 65°C. The mixture was continuously heated for 4 hours with stirring to allow graft polymerization (step (ii)). The remaining butadiene was removed after cooling to ordinary temperature. After reaction, the particles were rinsed with tetrahydrofuran, and dried overnight in a vacuum at 40°C to yield a resin composition containing vinyl alcohol polymer (A) and graft copolymer (B1). Details are shown in Table 1.

Synthesis Example 3

The ethylene-vinyl alcohol copolymer particles after the graft polymerization in Synthesis Example 1 were added to an extraction solvent (a 4:6 mixture of water and isopropanol (mass ratio)), and extracted at 80°C for 3 hours. After removing the extract portion, the unextracted residue was dried overnight in a vacuum at 40°C to obtain a graft copolymer (B1). The graft copolymer (B1) formed coarse clumps as a result of particles sticking together in the process of collecting the unextracted residue, and it was not possible to measure the particle size by the method that measures the size of dispersed particles in the manner described above. Details are shown in Table 1.

Synthesis Example 4

A commercially available ethylene-vinyl alcohol copolymer (E105 manufactured by Kuraray Co., Ltd.; ethylene unit content: 44 mol%, mass fraction of ethylene: 33.3 mass%, mass fraction of vinyl alcohol: 66.7 mass%) was pulverized, and classified with a 425 $\mu$m mesh sieve and a 710 $\mu$m mesh sieve to obtain particles having a particle size distribution of 425 $\mu$m to 710 $\mu$m. After classification, 100 parts by mass of the particles was irradiated with an electron beam (30 kGy) (step (i)). Separately, 20 parts by mass of isoprene, and 980 parts by mass of methanol were charged into an autoclave equipped with a stirrer, a nitrogen conduit, and a particle feed port, and inside of the system was replaced with nitrogen for 30 minutes by bubbling nitrogen in an ice-cooled state. The autoclave was then charged with 100 parts by mass of the ethylene-vinyl alcohol copolymer that had been irradiated with an electron beam, and, after sealing the autoclave, the whole was heated until the inner temperature reached 40°C. With the copolymer particles being dispersed in the liquid, the mixture was continuously heated for 4 hours with stirring to allow graft polymerization (step (ii)). After filtration, the collected particles were rinsed with tetrahydrofuran, and dried overnight in a vacuum at 40°C to yield a resin composition containing vinyl alcohol polymer (A) and graft copolymer (B1). Details are shown in Table 1.

Examples 1 to 4

A resin composition containing a rubber component (C), an inorganic filler (D), a silane coupling agent (E), an oil (F), a vulcanization auxiliary agent, a vinyl alcohol polymer (A), and a graft copolymer (B1) in the proportions (parts by mass) shown in Table 2 was supplied into a closed-type Banbury mixer, and kneaded for 6 minutes so that the mixture composition had an actual temperature of 150°C. After kneading, the mixture was taken out of the mixer, and cooled to room temperature. The mixture was put back in the closed-type Banbury mixer, and kneaded for 6 minutes so that the mixture composition had an actual temperature of 150°C. After kneading, the mixture was taken out of the mixer, and cooled to room temperature. Once again, the mixture was put in the closed-type Banbury mixer, and kneaded for 75 seconds after adding a cross-linking agent and a vulcanization accelerator, starting from 50°C and ending at 100°C. This produced a rubber composition. The rubber composition was press molded (160°C, 28 to 40 min) into a rubber composition sheet (2 mm thickness), and a cylindrical specimen (16 mm in width, 80 mm in diameter) for the measurement of coefficient of friction was obtained. Table 2 shows the compositions, along with the evaluation results for various properties. The vulcanization auxiliary agent, the cross-linking agent, and the vulcanization accelerator were added in amounts of 5.5 parts by mass, 1.5 parts by mass, and 2.1 parts by mass, respectively, relative to 100 parts by mass of the rubber component (C).

Comparative Example 1

A rubber composition and a rubber composition sheet were obtained in the same manner as in Examples, except that the resin composition containing vinyl alcohol polymer (A) and graft copolymer (B1) was not added in the fabrication of the rubber composition sheet. Table 2 shows the composition, along with the evaluation results for various properties.

Comparative Example 2

A rubber composition and a rubber composition sheet were obtained in the same manner as in Examples 1 to 4, except that a commercially available polyvinyl alcohol (Kuraray Poval 28-98, manufactured by Kuraray Co., Ltd.) was used in the amount shown in Table 2 in the fabrication of the rubber composition sheet, instead of using the resin composition containing vinyl alcohol polymer (A) and graft copolymer (B1). Table 2 shows the composition, along with the evaluation results for various properties.

Comparative Example 3

A rubber composition and a rubber composition sheet were obtained in the same manner as in Examples, except that the resin composition of Synthesis Example 4 was used in the amount shown in Table 2 in the fabrication of the rubber composition sheet, instead of using the resin composition containing vinyl alcohol polymer (A) and graft copolymer (B1). Table 2 shows the composition, along with the evaluation results for various properties.

[Table 1]

| | Vinyl alcohol polymer (A) | Graft copolymer (B1) | | | | Resin composition | |
|---|---|---|---|---|---|---|---|
| | Type of polymer | Type of main-chain polymer | Type of side-chain diene rubber | main chain/ side chain mass ratio | (A)/ (B1) mass ratio | Total degree of modification [mol%] | Average particle diameter [μm] |
| Synthesis Example 1 | EVOH | EVOH | Polyisoprene | 37.8/62.2 | 45.9/54.1 | 21.6 | 344 |
| Synthesis Example 2 | EVOH | EVOH | Polybutadiene | 46.1/53.9 | 22.1/77.8 | 33.1 | 118 |
| Synthesis Example 3 | - | EVOH | Polyisoprene | 37.8/62.2 | 0.0/100.0 | 47.4 | - |
| Synthesis Example 4 | EVOH | EVOH | Polyisoprene | 68.3/31.7 | 94.1/5.9 | 1.1 | 578 |

[Table 2]

| | Rubber composition | | | | | | | | | | Results of property evaluations | | | |
| --- | --- | --- | --- | --- | --- | --- | --- | --- | --- | --- | --- | --- | --- | --- |
| | Rubber component (C) | | Inorganic filler (D) | | Silane coupling agent (E) [parts by mass] | Oil (F) [parts by mass] | Resin composition | | | | Mooney viscosity [relative value] | Wear resistance [relative value] | Wet grip performance [relative value] | Ice grip performance [relative value] |
| | SBR [parts by mass] | Natural rubber [parts by mass] | Carbon black [parts by mass] | Silica [parts by mass] | | | Type | Content of vinyl alcohol polymer (A)[parts by | mass] Content of graft copolymer (B1) [parts by mass] | Content of (B1) relative to (A)+(B1) [mass%] | | | | |
| Example 1 | 70 | 30 | 10 | 80 | 6.4 | 30 | Synthesis Example 1 | 2.3 | 2.7 | 54.1 | 91 | 119 | 101 | 131 |
| Example 2 | 70 | 30 | 10 | 80 | 6.4 | 30 | Synthesis Example 2 | 1.1 | 3.9 | 77.8 | 99 | 110 | 102 | 140 |
| Example 3 | 70 | 30 | 10 | 80 | 6.4 | 30 | Synthesis Example 2 | 2.2 | 7.8 | 77.8 | 99 | 114 | 105 | 141 |
| Example 4 | 70 | 30 | 10 | 80 | 6.4 | 30 | Synthesis Example 3 | 0.0 | 5.0 | 100.0 | 95 | 106 | 101 | 135 |
| Comparative Example 1 | 70 | 30 | 10 | 80 | 6.4 | 30 | - | - | - | - | 100 | 100 | 100 | 100 |
| Comparative Example 2 | 70 | 30 | 10 | 80 | 6.4 | 30 | (PVOH particle) | 5.0 | - | - | 113 | 98 | 84 | 121 |
| Comparative Example 3 | 70 | 30 | 10 | 80 | 6.4 | 30 | Synthesis Example 4 | 4.7 | 0.3 | 5.9 | 91 | 105 | 101 | 115 |

EP 3 805 309 A1

As is clear from Examples 1 to 4, the rubber compositions of the present invention have higher moldability than the ordinary composition represented by Comparative Example 1, and the molded products can have greatly improved grip performance, particularly on ice, while maintaining high wear resistance. This makes a rubber composition of the present invention applicable particularly to the tread of tires.

When vinyl alcohol polymer is added by itself as in Comparative Example 2, the moldability deteriorates as a result of thickening of the composition, and the wear resistance does not improve. Such compositions are also inferior in terms of a balance, as demonstrated by serious decrease of wet grip performance with only slight improvement of grip performance on ice. A composition with a graft copolymer content falling outside of the range of the present invention as in Comparative Example 3 has inferior grip performance on ice, and the wear resistance does not sufficiently improve.

**Claims**

1. A rubber composition comprising: a copolymer (B) constituted of a vinyl alcohol polymer (B-1) region and a diene polymer (B-2) region; and a rubber component (C), wherein the rubber composition comprises 1 to 20 parts by mass of the copolymer (B) relative to 100 parts by mass of the rubber component (C).

2. The rubber composition according to claim 1, wherein the rubber composition further comprises a vinyl alcohol polymer (A), the vinyl alcohol polymer (A) being contained in an amount of 1 to 20 parts by mass relative to 100 parts by mass of the rubber component (C).

3. The rubber composition according to claim 2, wherein the rubber composition comprises 10 to 90 mass% of the copolymer (B) relative to total 100 parts by mass of the vinyl alcohol polymer (A) and the copolymer (B).

4. The rubber composition according to any one of claims 1 to 3, wherein the vinyl alcohol polymer (B-1) is an ethylene-vinyl alcohol copolymer.

5. The rubber composition according to any one of claims 1 to 4, wherein the vinyl alcohol polymer (A) is an ethylene-vinyl alcohol copolymer.

6. The rubber composition according to any one of claims 1 to 5, wherein the diene polymer (B-2) is at least one selected from the group consisting of polybutadiene, polyisoprene, and polyisobutylene.

7. The rubber composition according to any one of claims 1 to 6, wherein the copolymer (B) is a graft copolymer (B1).

8. The rubber composition according to any one of claims 1 to 7, wherein the rubber composition further comprises an inorganic filler (D).

9. The rubber composition according to any one of claims 1 to 8, wherein the rubber composition further comprises a silane coupling agent (E).

10. The rubber composition according to any one of claims 1 to 9, wherein the rubber composition further comprises an oil (F).

11. The rubber composition according to any one of claims 1 to 10, wherein the rubber component (C) comprises a synthetic rubber (C-1).

12. The rubber composition according to claim 11, wherein the synthetic rubber (C-1) comprises at least one diene rubber selected from the group consisting of polybutadiene rubber, polyisoprene rubber, isobutylene rubber, isobutylene-isoprene rubber, styrene-butadiene rubber, styrene-isoprene rubber, styrene-isoprene-butadiene rubber, end-modified styrene-butadiene rubber, chloroprene rubber, nitrile rubber, ethylene-propylene rubber, propylene-butylene rubber, ethylene-propylene-diene rubber, and acrylonitrile-butadiene rubber.

13. The rubber composition according to any one of claims 1 to 12, wherein the rubber composition is for treads of tires.

14. A tire comprising a tread using the rubber composition of any one of claims 1 to 13.

15. A method for producing a rubber composition, comprising the steps of:

(i) irradiating a vinyl alcohol polymer (B-1) with an active energy ray;

(ii) graft polymerizing the vinyl alcohol polymer (B-1) after the active energy ray irradiation by dispersing the vinyl alcohol polymer (B-1) in a raw material monomer of a diene polymer (B-2) or in a solution containing the monomer; and

(iii) mixing a rubber component (C) with a graft copolymer (B1) formed in said step (ii) from the vinyl alcohol polymer (B-1) and the diene polymer (B-2),

the rubber composition comprising 1 to 20 parts by mass of the graft copolymer (B1) relative to 100 parts by mass of the rubber component (C).

16. The method for producing a rubber composition according to claim 15, wherein, in said step (iii), an unreacted part of the vinyl alcohol polymer (B-1) in said step (ii) is mixed as a vinyl alcohol polymer (A) with the graft copolymer (B1) and the rubber component (C).

## INTERNATIONAL SEARCH REPORT

| International application No. |
| --- |
| PCT/JP2019/022775 |

### A. CLASSIFICATION OF SUBJECT MATTER

Int.Cl. C08L21/00(2006.01)i, B60C1/00(2006.01)i, C08F261/04(2006.01)i,
C08K3/013(2018.01)i, C08K5/54(2006.01)i, C08L9/00(2006.01)i,
C08L29/04(2006.01)i, C08L51/06(2006.01)i, C08L91/00(2006.01)i

According to International Patent Classification (IPC) or to both national classification and IPC

### B. FIELDS SEARCHED

Minimum documentation searched (classification system followed by classification symbols)
Int.Cl. C08L21/00, B60C1/00, C08F261/04, C08K3/013, C08K5/54, C08L9/00,
C08L29/04, C08L51/06, C08L91/00

Documentation searched other than minimum documentation to the extent that such documents are included in the fields searched
Published examined utility model applications of Japan 1922–1996
Published unexamined utility model applications of Japan 1971–2019
Registered utility model specifications of Japan 1996–2019
Published registered utility model applications of Japan 1994–2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 41-21994 B1 (KURASHIKI RAYON CO., LTD.) 22 December 1966, claim 1, page 1, right column, line 1 from the bottom to page 2, left column, line 5, page 2, left column, lines 10-26, example 1 (Family: none) | 1-16 |
| X A | JP 2007-211059 A (JSR CORPORATION) 23 August 2007, claims 1, 2, paragraphs [0056], [0057], [0077], [0080], [0081], example 1 (Family: none) | 1-4, 6, 8-12 5, 7, 13-16 |
| A | JP 2016-797 A (BRIDGESTONE CORPORATION) 07 January 2016, claims 1-3, 5-8, paragraphs [0048], [0050]-[0056], example 1 & US 2017/0121465 A1 claims 1-3, 5-8, example 1 & WO 2015/190029 A1 & EP 3156437 A1 & CN 106459422 A | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 29 July 2019 (29.07.2019) | 03 September 2019 (03.09.2019) |

| Name and mailing address of the ISA/ Japan Patent Office 3-4-3, Kasumigaseki, Chiyoda-ku, Tokyo 100-8915, Japan | Authorized officer |
| | Telephone No. |

Form PCT/ISA/210 (second sheet) (January 2015)

**INTERNATIONAL SEARCH REPORT**

International application No.

PCT/JP2019/022775

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-31768 A (SHOWA DENKO KABUSHIKI KAISHA) 06 February 2001, entire text (Family: none) | 1-16 |
| EA | WO 2019/124553 A1 (KURARAY CO., LTD.) 27 June 2019, entire text (Family: none) | 1-16 |
| PA | WO 2019/004455 A1 (KURARAY CO., LTD.) 03 January 2019, entire text (Family: none) | 1-16 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5147406 A
- JP 5148390 A
- JP 2011184494 A
- JP 2016000797 A
- JP 8081505 A
- JP 9136903 A